(19) Europäisches Patentamt / European Patent Office / Office européen des brevets

(11) **EP 3 840 559 B1**

(12) **EUROPÄISCHE PATENTSCHRIFT**

(45) Veröffentlichungstag und Bekanntmachung des Hinweises auf die Patenterteilung:
**23.07.2025  Patentblatt 2025/30**

(21) Anmeldenummer: **19765970.9**

(22) Anmeldetag: **22.08.2019**

(51) Internationale Patentklassifikation (IPC):
**A01B 39/08** *(2006.01)*    **A01M 21/02** *(2006.01)*
**A01B 79/00** *(2006.01)*    **B64U 10/14** *(2023.01)*
**B64U 50/19** *(2023.01)*

(52) Gemeinsame Patentklassifikation (CPC):
**A01B 79/005; A01B 39/085; A01M 21/02;**
B64U 10/14; B64U 50/19; B64U 2101/30

(86) Internationale Anmeldenummer:
**PCT/EP2019/072522**

(87) Internationale Veröffentlichungsnummer:
**WO 2020/039046 (27.02.2020 Gazette 2020/09)**

(54) **MOBILE ANALYSE- UND BEARBEITUNGSVORRICHTUNG**

MOBILE ANALYSIS AND PROCESSING DEVICE

DISPOSITIF D'ANALYSE ET DE TRAITEMENT MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **24.08.2018  DE 102018120753**

(43) Veröffentlichungstag der Anmeldung:
**30.06.2021  Patentblatt 2021/26**

(73) Patentinhaber: **Naiture GmbH & Co. Kg**
**25764 Friedrichsgabekoog (DE)**

(72) Erfinder:
• **HUSSMANN, Stephan**
**25746 Heide (DE)**
• **KNOLL, Florian Johannes**
**25813 Husum (DE)**
• **CZYMMEK, Vitali**
**25746 Heide (DE)**

(74) Vertreter: **Puschmann Borchert Kaiser Klettner**
**Patentanwälte Partnerschaft mbB**
**Bajuwarenring 21**
**82041 Oberhaching (DE)**

(56) Entgegenhaltungen:
**WO-A1-2017/181127    WO-A1-2018/033925**

**Beschreibung**

Die Erfindung betrifft eine mobile Analyse- und Bearbeitungsvorrichtung für die Landwirtschaft zur Bearbeitung des Bodens und/oder zur Manipulation von Flora und Fauna nach Anspruch 1 sowie ein Verfahren zur Echtzeit Regelung der Bearbeitung des Bodens und/oder der Manipulation von Flora und Fauna durch die Vorrichtung gemäß dem Anspruch 14.

Die Unkrautregulierung in der Landwirtschaft ist eine sehr arbeitsintensive Aufgabe, besonders im biologischen Anbau, die den Einsatz von Chemikalien verbietet oder einschränkt. Je nach angebauter Kultur ist die Unkrautregulierung in unmittelbarer Nähe der Nutzpflanze notwendig. Diese Regulierung findet im Allgemeinen im frühen Wachstumszustand statt. Sowohl Nutzpflanze auf der einen Seite als auch Unkraut bzw. Beikraut auf der anderen Seite sind da noch sehr klein und nahe beieinander. Um eine Beschädigung der Nutzpflanze zu vermeiden, ist es zielführend selektive Methoden anzuwenden. Dies erfolgt im biologischen Anbau, zum Beispiel für Möhren, durch eine arbeitsintensive, körperschädigende manuelle Arbeit mit sogenannten *"Jäte-Fliegern"*. Saison-Arbeitskräfte liegen auf dem Bauch auf einer Pritsche und entfernen die Unkräuter.

Für Sonderkulturen mit größeren Pflanzenabständen, wie zum Beispiel Zuckerrüben, oder Salat, sind Traktoranbaugeräte bekannt, welche in der Lage sind, einzelne Nutzpflanzen zu erkennen und entsprechende Werkzeuge so anzusteuern, dass die Fläche der Nutzpflanze unbearbeitet bleibt. Für diese Aufgabe ist keine Selektivität notwendig. D.h., dass diese Systeme nicht die zu überarbeitenden Flächen überprüfen, sondern vielmehr das Werkzeug *"auf Blind"* anhand der bekannten Nutzpflanzenposition steuern. Allgemein definiert der Abstand zur Nutzpflanze die Genauigkeitsanforderungen.

Aus der DE 40 39 797 A1 ist eine Vorrichtung zur Unkrautbekämpfung bekannt, wobei ein Aktor zur Vernichtung des Beikrauts permanent läuft und erst, wenn durch einen Sensor eine Kulturpflanze erkannt wird, dieser kurzzeitig unterbrochen wird.

Aus der DE 10 2015 209 879 A1 ist eine Vorrichtung zur Beschädigung von Beikraut bekannt, welches ein Bearbeitungswerkzeug aufweist. Dieses Bearbeitungswerkzeug dient dazu, das Beikraut zu beschädigen. Zudem ist eine Klassifizierungseinheit vorgesehen, welche die Positionsdaten des Beikrauts entweder aufweist oder das Beikraut erkennt und die Positionsdaten ermittelt. Eine Lokalisierungseinheit ermittelt eine Relativposition zwischen dem Bearbeitungswerkzeug und dem Beikraut. Eine Manipulatoreinheit in Form eines Wagens positioniert das Bearbeitungswerkzeug in Abhängigkeit der ermittelten Relativpositionen entsprechend.

Ein entsprechendes Gerät mit einer Druckfördereinheit und einer Flüssigkeitsabgabeeinheit ist aus der DE 10 2015 209 891 A1 bekannt. Bei dieser Ausführungsform wird das Beikraut durch Aufsprühen von Flüssigkeit unter Druck vernichtet.

Aus der DE 10 2015 209 888 A1 ist es bekannt, die Flüssigkeit impulsmäßig auf das Beikraut aufzubringen und somit dieses zu beschädigen.

In der DE 10 2013 222 776 A1 wird ein in einem Wagen gelagerter Stempel offenbart, der in einer Führungseinrichtung zur Führung des Stempels angeordnet ist. Hierbei wird der Stempel auf das Beikraut aufgesetzt und mit Druck beaufschlagt. Über den Druck beaufschlagt wird das Beikraut vernichtet.

Die WO 2018/033925 A1 offenbart ein System und Verfahren zur Verwaltung der Drohnenflotte für die Ernte und Düngung. Der technische Einsatz dieses Gegenstandes liegt auf dem Gebiet der Ernte und des Beschneidens von Obst-, Wein - und hochwachsenden Gemüsepflanzen. Der Einsatz auf dem technischen Feld für Feldpflanzen/Freilandpflanzen und deren Aufzucht wird ausdrücklich als ungeeignet angesehen und nicht verfolgt.

Die WO 2017/181127 A1 zeigt Roboter-Pflanzenpflegesysteme und -methoden mit dem zur Pflanzenpflege auf eine Zielpflanze ein eindeutig detektierbares Signal, nämlich ein Biomarker gegeben wird. Dieser Biomarker ist insbesondere biologisch abbaubar, Hierfür eignen sich genetische Modifikationen mit fluoreszierenden Proteinen, Farben oder Label/Markierungen, welches durch maschinelle Abtastung eine Unterscheidung zu anderer Vegetation ermöglicht. Damit sollen Pflanzenareale, die nicht als Zielpflanze erkannt werden als Unkraut ("weed") oder angrenzendes Laub ("foilage") dargestellt werden und besprüht oder mit hydraulischen Hacken geschnitten werden.

Mit Agrarrobotern und Erntemaschinen, die automatisiert und mit Telematik Einrichtung versehen die Landwirtschaft technisch unterstützen, werden derzeit neue Wege beschritten. Vielfach können technische Prinzipien und Erkenntnisse aus der Raumfahrt, der Fernerkundung und der Robotik für die Fragestellungen in der Landwirtschaft übernommen werden, jedoch sind diese an die Aufgabenstellungen in der Landwirtschaft gezielt anzupassen und erfordern neue Vorrichtungen und Verfahren.

Beispielsweise sind die oben genannten bestehenden automatisierten Agrarroboter systembedingt darauf ausgerichtet, nur eine Pflanzenreihe nach der anderen abzufahren. Eingriffe erfolgen nur in die Flora und dies nur seriell. Eine Kontrolle erfolgt in der Regel anschließend durch Begehung, zum Beispiel durch den qualifizierten Menschen.

Nachteilig an den bekannten Vorrichtungen ist auch, dass es sich jeweils um Spezialkonstruktionen von Wagen handelt, welche jeweils nur reihenweise die Nutzpflanzen abfahren und relativ unflexibel einsetzbar sind.

Der Erfindung liegt die Aufgabe zugrunde, eine mobile Analyse- und Bearbeitungsvorrichtung für die Landwirtschaft zur Bearbeitung des Bodens und/oder zur Manipulation von Flora und Fauna sowie ein Verfahren für die Vorrichtung zur Verfügung zu stellen, welche eine in Echtzeit geregelte, qualifizierte Beseitigung der detektierten Flora und/oder Fauna sowie auch eine parallele Analyse von Flora und Fauna ermöglicht. Vorzugsweise soll die Vorrichtung mit unterschiedlichen Trägern verbindbar sein, welche die Vorrichtung zum Einsatzort und über den Einsatzort bewegen.

Diese Aufgabe wird für die mobile Analyse- und Bearbeitungsvorrichtung durch die Merkmale des Anspruches 1 und für das Verfahren durch die Merkmale des Anspruches 14 gelöst.

Die Unteransprüche bilden vorteilhafte Weiterbildungen der Erfindung.

Der Erfindung liegt die Erkenntnis zugrunde, dass durch Schaffen einer von einem Träger unabhängigen mobilen Vorrichtung, welche sämtliche Aggregate zur Analyse- und Bearbeitung aufweist, die Einsatzflexibilität und die sich daraus ergebenden Möglichkeiten erheblich erhöht werden.

Die Erfindung betrifft daher eine mobile Analyse- und Bearbeitungsvorrichtung für die Landwirtschaft zur Bearbeitung des Bodens und/oder zur Manipulation von Flora und Fauna. Die Vorrichtung umfasst die Merkmale des Anspruchs 1.

Durch diese Vorrichtung wird eine Mobilität und Flexibilität geschaffen, gemäß der die Vorrichtung eine Einheit bildet, mit der sämtliche Daten in Echtzeit abgearbeitet, Steuersignale für den Sensor, die Werkzeugeinheit und/oder den Aktor generiert und umgehend gemäß den Steuersignalen abgearbeitet werden kann. Hierdurch ergeben sich Möglichkeiten der Kombination beispielsweise mit verschiedenen Trägern, welche die Vorrichtung bedarfsweise über das Feld bewegen.

Um einzelne Komponenten einfach austauschen zu können und somit die Rüstzeiten zu verringern, ist die Vorrichtung zweigeteilt ausgebildet. Die erste Einheit und die zweite Einheit sind über die Schnittstelle zum Datenaustausch miteinander verbindbar. Zudem ist es durch die Zweiteilung auch möglich, dass die beiden Einheiten räumlich getrennt voneinander angeordnet werden können. Dies ist beispielsweise dann von Vorteil, wenn das Gewicht der bewegten Teile der Vorrichtung möglichst gering sein soll. In diesem Fall könnte die zweite Einheit zentral fix angeordnet werden und die erste Einheit auf dem Feld bewegt werden.

Durch die Gehäusesind die in den Einheiten vorgesehenen Aggregate vor äußeren Einflüssen geschützt.

Das erste und das zweite Gehäuse sind über eine Steckverbindung lösbar miteinander verbunden. Hierdurch ist ein modulartiges Zusammenfügen der beiden Einheiten, aber auch ein Austausch bei Ausfall einer Einheit, ohne weiteres möglich.

Vorzugsweise umfasst die visuelle Detektionseinheit eine Segmentierungs- und Datenreduzierungseinrichtung. Die visuelle Detektionseinheit kann dabei einen Klassifikator umfassen, der eine Bewertung der abgeglichenen Aufnahmedaten mit bestehenden definierten Datensätzen in der Datenbank, insbesondere unterstützt durch Künstliche Intelligenz, durchführt.

Gemäß einer Ausführungsform der Erfindung ist der Sensor eine visuelle Detektionseinheit mit einer Kamera. Die zu verarbeitenden Daten sind somit Bilddaten, welche ohne weiteres mit einer Datenbank abgeglichen werden können.

Um die Vorrichtung bedarfsweise mit einem Träger, insbesondere als Flugdrohne ausgebildeten, verbinden zu können, welche die Vorrichtung bewegt, sind entsprechende Mittel zum Verbinden mit dem Träger vorgesehen.

Gemäß einer Ausführungsform der Erfindung weist das erste und das zweite Gehäuse als Mittel für das bedarfsweise Verbinden mit dem Träger Aufnahmen auf, welche entsprechenden Haltemitteln des Trägers zugeordnet sind, über welche die Vorrichtung durch den Träger ergriffen und bewegt werden kann. Alternativ oder zusätzlich kann das erste und das zweite Gehäuse als Mittel für das bedarfsweise Verbinden mit dem Träger Kupplungsmittel aufweisen, welche entsprechenden Kupplungsmittel des Trägers zugeordnet sind, über welche die Vorrichtung mit dem Träger verbunden und bewegt werden kann. Ein einfaches und schnelles Verbinden mit einem Träger zum Transport der Vorrichtung wird hierdurch ermöglicht.

Die Werkzeugeinheit weist vorzugsweise mindestens eine Vorschubeinheit und eine Rotationseinheit auf, welche mit dem Motor zusammenwirkt. Der Einsatzbereich des Werkzeugs wird hierdurch auf einfache Weise erweitert, ohne dass die Vorrichtung bewegt werden muss.

Vorzugsweise ist die Rotationseinheit an einem distalen Ende mit zumindest dem einen Werkzeug versehen, insbesondere mit einer Fräse oder mit einer Messereinheit. Mit Rotation beispielsweise der Messereinheit können zum Beispiel kleine Kerbtiere oder Beikraut selektiv zerstört werden.

Um das Gewicht der Vorrichtung weiter zu reduzieren, ist ein Spannungsanschluss für eine externe Spannungsversorgung vorgesehen. Dabei kann der Spannungsanschluss an der ersten Einheit vorgesehen sein. Im zusammengebauten Zustand von erster Einheit und zweiter Einheit kann die zweite Einheit über diesen Spannungsanschluss die erste Einheit als auch die zweite Einheit mit Spannung versorgen. Vorzugsweise wird dabei die Spannungsquelle eines Trägers zur Spannungsversorgung genutzt.

Um einen Datenaustausch zwischen einem Träger und der Vorrichtung zu ermöglichen ist eine weitere Kommunikationsschnittstelle an der Vorrichtung für den Träger vorgesehen.

Die weitere Kommunikationsschnittstelle kann sowohl in der ersten als auch in der zweiten Einheit angeordnet sein. Bevorzugt ist diese in der zweiten Einheit vorgesehen.

Die oben erwähnte Aufgabe wird auch durch ein Verfahren zur Echtzeitregelung der Bearbeitung des Bodens und/oder der Manipulation von Flora und Fauna durch die Vorrichtung gemäß der eben genannten Art gelöst, wobei das Verfahren die Schritte des Anspruchs 14 aufweist.

Vorzugsweise erfolgt nach Vorliegen der regelungs- und/oder steuerungstechnischen Daten ein Anfahren des Motors, des Aktors, der Werkzeugeinheit und/oder eines zugeordneten Trägers zur Bearbeitung des Bodens und/oder zur Manipulation von Flora und Fauna.

Gemäß einem bevorzugten Verfahren nach der Erfindung wird die Bewertung in einem mit dem Klassifikator zusammenwirkenden zweiten Rechner und die Verarbeitung und Umsetzung der Bewertung in regelungs- und/oder steuerungstechnische Daten in dem ersten Rechner, wofür die Bewertung von dem zweiten Rechner an den ersten Rechner übermittelt wird. Hierdurch wird die Rechenzeit reduziert, da Rechner parallel arbeiten können. Zudem ergibt sich die Möglichkeit, dass die beiden Rechner nicht zwingend beieinander angeordnet sein müssen. Beispielsweise kann der zweite Rechner mit der zweiten Einheit entfernt von der ersten Einheit mit dem ersten Rechner angeordnet sein.

Die Speicherung, der qualitative Datenabgleich der Aufnahmedaten mit in der Datenbank hinterlegten Daten und/oder die Bewertung durch den Klassifikator werden vorzugsweise durch Künstliche Intelligenz unterstützt. Hierdurch kann ein nahezu autonom arbeitendes System geschaffen werden. Die Vorrichtung, insbesondere die erste Einheit und die zweite Einheit, können modular ausgebildet sein, sodass diese miteinander verbunden aber auch mit anderen Einheiten eines Gesamtsystems verbunden werden können.

Unter Echtzeit wird die Möglichkeit verstanden, Analyse- und Bearbeitungsvorgänge in einem Arbeitsgang in situ durchführen zu können.

Unter einem Voxel wird im Zusammenhang mit der Erfindung ein räumlicher Datensatz verstanden, der über den Sensor bzw. eine visuelle Detektionseinheit in einem bildgebenden Verfahren, diskret oder zeitlich kontinuierlich generiert wird.

Der Aktor weist bevorzugt eine Mechanik auf, insbesondere eine Dreheinheit, die sich in einer Halterung in dem Gehäuse der ersten Einheit befindet.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:

Fig. 1 eine schematische Darstellung eines Tragsystems mit räumlich getrennten Gehäusen einer mobilen Vorrichtung gemäß einer ersten Ausführungsform der Erfindung;

Fig. 2 eine schematische Darstellung eines Tragsystems mit räumlich getrennten Gehäusen einer mobilen Vorrichtung, die über eine Steckverbindung miteinander verbunden sind, gemäß einer zweiten Ausführungsform der Erfindung;

Fig. 3 eine Seitenansicht auf das Tragsystem gemäß der ersten Ausführungsform der Erfindung mit Anbindung der mobilen Vorrichtung an eine Flugdrohne;

Fig. 4 ein Flussdiagramm, welches die Schritte eines Verfahrens mit dem Tragsystem veranschaulicht;

Fig. 5 ein Flussdiagramm, welches die Schritte des Verfahrens zur Ermittlung der notwendigen Maßnahmen darstellt;

Fig. 6 ein durch die visuelle Detektionseinheit aufgenommenes Bild;

Fig. 7 ein schematischer Aufbau eines Convolution Neuronalen Netzwerkes ausgehend von dem Bild von Fig. 6;

Fig. 8 ein Flussdiagramm, welches ein Verfahren der Segmentierungs- und Datenreduktionseinheit zeigt;

Fig. 9 ein aus der Segmentierungs- und Datenreduktionseinheit erstelltes Zwischenbild;

Fig. 10 einen Teilausschnitt des Zwischenbildes mit drei unterschiedlichen Fällen für den Klassifikator;

Fig. 11 zwei prinzipielle Darstellungen von weiteren Pixelfeldern für die Bewertung durch den Klassifikator;

Fig. 12 zwei prinzipielle Darstellungen von weiteren Pixelfeldern für die Bewertung durch den Klassifikator;

Fig. 13     ein durch den Klassifikator erstelltes und bewertetes Bild, und

Fig. 14     die prinzipiellen Darstellungen der Arbeitsweise des Klassifikators.

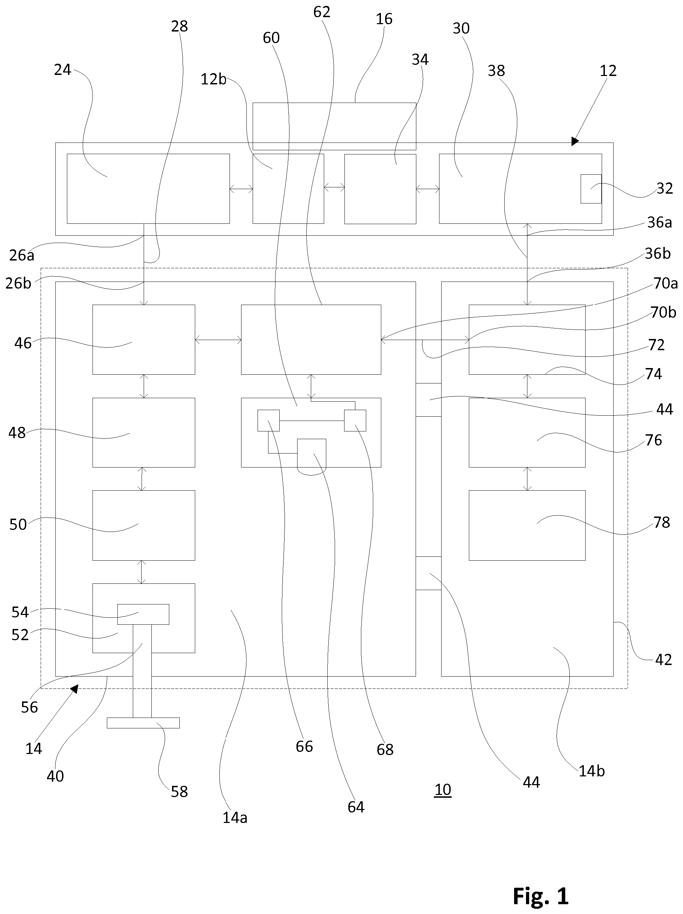

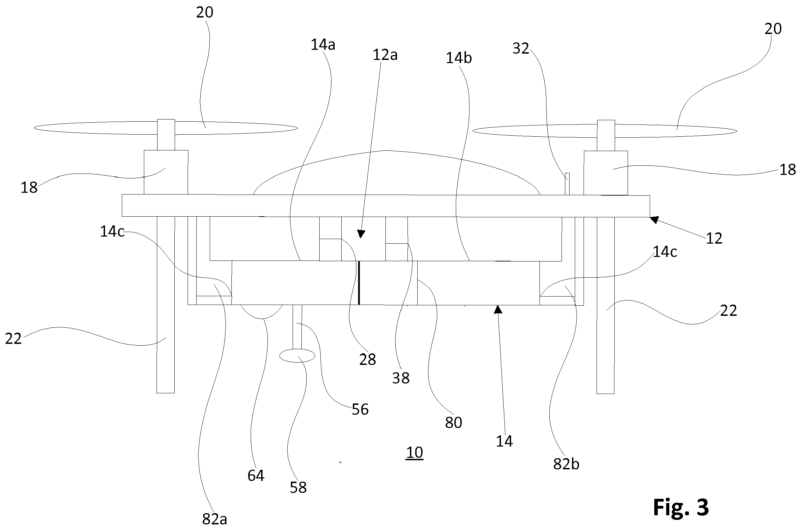

In Fig. 1 ist schematisch ein Trägersystem 10 dargestellt, welches aus einem Träger in Form einer Flugdrohne 12 und einer mobilen Vorrichtung 14 zur Bearbeitung des Bodens und zur Manipulation der Flora und Fauna in der Landwirtschaft besteht. Die Flugdrohne 12 umfasst einen Antrieb 16, der vier Elektromotoren 18 und über diese angetriebene Propeller 20 umfasst, siehe Figur 3. Zudem ist die Flugdrohne 12 mit 4 Füßen 22 unterhalb der Elektromotoren 18 versehen.

Gemäß der ersten Ausführungsform der Erfindung umfasst die Flugdrohne 12 eine Energiequelle in Form von Batterien 24, welche die Energieversorgung für den Antrieb 16 als auch für die weiteren Aggregate der Flugdrohne 12 sowie die mobile Vorrichtung 14 liefert. Hierfür ist eine Spannungsschnittstelle 26a an der Flugdrohne 12 und eine zu dieser Spannungsschnittstelle 26a korrespondierende Spannungsschnittstelle 26b an der mobilen Vorrichtung 14 vorgesehen, welche über eine lösbare Steckverbindung 28 miteinander verbunden sind. Zudem ist eine Kommunikationseinheit 30 mit einer Antenne 32 und eine GPS-Einheit 34 vorgesehen, welche fortlaufend den Standort der Flugdrohne 12 ermittelt, diese Standortdaten der Flugdrohne 12 an die mobile Vorrichtung 14 für die Zuordnung zu den von der mobilen Vorrichtung 14 erfassten Daten sowie an eine entfernt gelegene zentrale Recheneinheit übermittelt, die hier nicht näher dargestellt ist. Mithilfe der GPS-Einheit 34, der Kommunikationseinheit 30 und der mobilen Vorrichtung 14 kann Telemetrie durchgeführt werden. Zudem ist eine Steuereinrichtung 12b vorgesehen, welche den Antrieb 16 steuert.

Die Kommunikationseinheit 30 der Flugdrohne 12 umfasst neben der Antenne 32 eine weitere Schnittstelle 36a, welche einer zugeordneten Schnittstelle 36b der mobilen Vorrichtung 14 zugeordnet ist und über eine lösbare Steckverbindung 38 zum Datenaustausch hierüber miteinander verbunden sind.

Die mobile Vorrichtung 14 besteht aus zwei Einheiten 14a, 14b, nämlich einer ersten Einheit 14a mit einem ersten Gehäuse 40 und einer zweiten Einheit 14b mit einem zweiten Gehäuse 42. Das erste Gehäuse 40 und das zweite Gehäuse 42 sind lösbar über eine Steckverbindung 44 miteinander zu einer die mobile Vorrichtung 14 bildenden Einheit verbunden. Es gibt einen Satz unterschiedliche erste Einheiten 14a auf der einen Seite und einen Satz unterschiedlicher zweite Einheiten 14b auf der anderen Seite, welche durch einfaches miteinander verbinden individuell konfiguriert und an die Bedürfnisse angepasst werden können.

In dem ersten Gehäuse 40 ist ein erster Rechner 46, ein Aktor in Form eines beweglichen, motorisch angetriebenen Arms 48, ein mit dem Arm 48 zusammenwirkender Motor 50, ein an dem Arm 48 angeordnete Werkzeugeinheit 52, welche eine Vorschubeinheit 54 und eine Rotationseinheit 56 aufweist. An dem distalen Ende der Rotationseinheit 56 ist eine Fräse 58 als Werkzeug vorgesehen. Der Motor 50 treibt sowohl den Arm 48 als auch die Vorschubeinheit 54, die Rotationseinheit 56 und damit auch die Fräse 58 an. Der Arm 48 kann mehrteilig ausgebildet sein und über verschiedene Gelenke verfügen, welche im Einzelnen nicht dargestellt sind, da derartige motorisch betriebene Kinematiken bekannt sind. Über den Arm 48 wird die Werkzeugeinheit 52 relativ zur Flugdrohne 12 zu ihrem Einsatzbereich bewegt, so dass die Werkzeugeinheit 52 mit der Vorschubeinheit 54 und der Rotationseinheit 56 die Fräse 58 zur Bearbeitung der Pflanzen, beispielsweise Entfernen von Beikraut, und/oder zum Bearbeiten des Bodens einsetzen kann.

Weiterhin ist in der ersten Einheit 14a eine Kommunikationseinheit 60 und eine visuelle Detektionseinheit 62 vorgesehen. Die visuelle Detektionseinheit 62 umfasst eine Kamera 64, mit welcher Bilder erfasst werden, eine Segmentierungs- und Datenreduktionseinrichtung 66, einen Klassifikator 68, der auf Basis eines von der Segmentierungs- und Datenreduzierungseinrichtung 66 erzeugten Zwischenbildes oder Zwischendaten die Klassifikation mehrerer aus Pixeln bestehender Pixelfelder übernimmt, wie weiter unten noch näher beschrieben wird. Die visuelle Detektionseinheit 62 ist mit der Kommunikationseinheit 60 verbunden.

Die erste Einheit 14a weist eine Schnittstelle 70a auf, welche einer Schnittstelle 70b der zweiten Einheit 14b zugeordnet ist. Über eine Kommunikationsverbindung 72 ist die Kommunikationseinheit 60 über die Schnittstelle 70a mit der Schnittstelle 70b und darüber mit einer Kommunikationseinheit 74 in der zweiten Einheit 14b verbunden. Die Kommunikationseinheit 74 der zweiten Einheit 14b ist über die Schnittstelle 36b über die Steckverbindung 38 mit der Schnittstelle 36a und der Kommunikationseinheit 30 der Flugdrohne 12 verbunden.

In der zweiten Einheit 14b sind zudem ein zweiter Rechner 76 und eine Datenbank 78 vorgesehen.

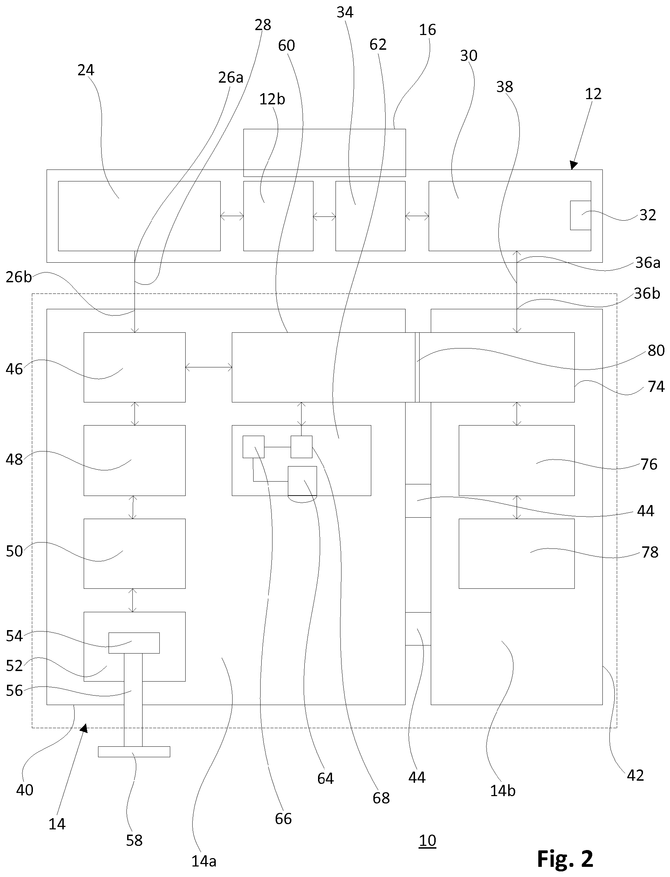

In der Fig. 2 ist eine weitere Ausführungsform des Trägersystems 10 dargestellt, wobei die Flugdrohne 12 identisch mit der ersten Ausführungsform ausgebildet ist. Lediglich die mobile Vorrichtung 14 unterscheidet sich durch eine Steckverbindung 80 zwischen der ersten Einheit 14a und der zweiten Einheit 14b, welche zudem auch die Kommunikationseinheit 60 der ersten Einheit 14a mit der Kommunikationseinheit 74 lösbar verbindet. Durch einfaches Zusammenstecken können unterschiedliche erste Einheiten 14a mit unterschiedlichen zweiten Einheiten 14b kombiniert und zu einer mobilen Einheit 14 zusammengefügt werden.

In Fig. 3 ist die Flugdrohne 12 in Seitenansicht dargestellt, wobei dadurch lediglich zwei von vier Elektromotoren 18 mit zugeordneten Propellern 20 sichtbar sind. Unterhalb der Elektromotoren 18 sind jeweils die Füße 22 angeordnet. Zwischen den Füßen 22 sind zwei Greifarme 82a, 82b vorgesehen, welche die mobile Vorrichtung 14 bedarfsweise ergreifen und anheben und wieder absetzen und ablegen. Die mobile Vorrichtung 14 besteht aus den beiden Einheiten 14a und 14b, welche über die Steckverbindung 80 miteinander lösbar verbunden sind. In der ersten Einheit 14a ist die Kamera 64 als Teil der visuellen Detektionseinheit 62 sowie die Fräse 58 an dem distalen Ende der Rotationseinheit 56 erkennbar.

Die mobile Vorrichtung 14 kann auch mit mehreren unterschiedlichen Werkzeugeinheiten 52 ausgerüstet sein, welche mit einem gemeinsamen Arm 48 und beispielsweise einen Werkzeugrevolver versehen ist, der die benötigte Werkzeugeinheit 52 in die Aktivierungsposition bringt. Denkbar ist aber auch, dass die unterschiedlichen Werkzeugeinheiten jeweils einen eigenen Aktor aufweisen.

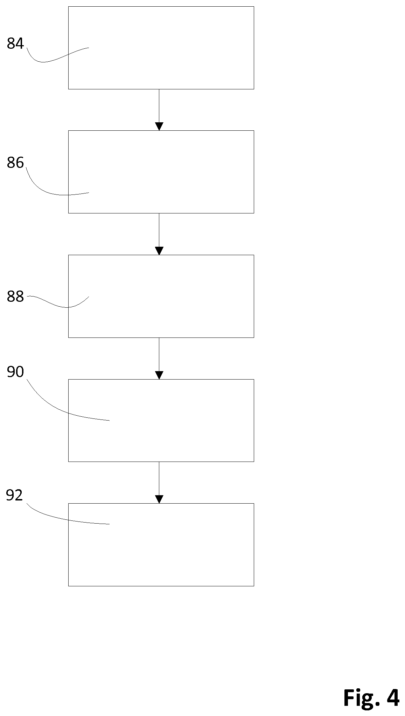

In Fig. 4 sind in einem Flussdiagramm die Schritte aufgezeigt, welche nacheinander durchlaufen werden, um mit dem Trägersystem 10 eine Bearbeitung des Bodens und die Manipulation von Flora und Fauna in der Landwirtschaft durchzuführen.

In einem ersten Schritt 84 werden zunächst mit dem Trägersystem 10 die notwendigen Maßnahmen auf der zugeordneten landwirtschaftlichen Fläche ermittelt. Beispielsweise wird hierfür das Trägersystem 10 zu einer zu bearbeitenden landwirtschaftlichen Fläche, beispielsweise zu einem landwirtschaftlichen Feld, gebracht oder direkt von einem zentralen Ort aus dorthin geflogen. Die Flugdrohne 12 mit der mobilen Vorrichtung 14 startet und fliegt das landwirtschaftliche Feld ab. Über eine ortsfeste zentrale Recheneinheit erhält das Trägersystem 10 die notwendigen Daten über das zu begutachtende landwirtschaftliche Feld. Die zentrale Recheneinheit kann hierbei auch ein Smartphone sein. Über die visuelle Detektionseinheit 62 mit der Kamera 64 der mobilen Vorrichtung 14 wird das landwirtschaftliche Feld in Bildern erfasst. Die Bilder werden ausgewertet und mit einem Abgleich in der Datenbank 78 die notwendigen Maßnahmen für dieses landwirtschaftliche Feld schlussendlich ermittelt.

In einem nächsten Schritt 86 wird auf Grundlage der ermittelten Maßnahmen für das landwirtschaftliche Feld oder für Teilbereiche des landwirtschaftlichen Feldes aus einem Satz erster Einheiten 14a und einem Satz unterschiedlicher zweiter Einheiten 14b die für die notwendige Maßnahme geeignete mobile Einheit 14 zusammengestellt und die beiden Einheiten 14a, 14b miteinander verbunden.

In einem nächsten Schritt 88 wird die mobile Vorrichtung 14 mit der Flugdrohne 12 über den Greifarm 82a und den Greifarm 82b jeweils seitlich ergriffen und durch diesen in Richtung Flugdrohne 12 nach oben in eine Aufnahme 12a der Flugdrohne 12 verfahren. Dabei werden die Spannungsschnittstellen 26a, 26b über die Steckverbindung 28 und die Schnittstellen 36a, 36b über die Steckverbindung 38 miteinander verbunden. Hierdurch wird die mobile Vorrichtung 14 mit Spannung aus der Batterie 24 der Flugdrohne 12 versorgt und ein Datenaustausch über die Antenne 32 der Kommunikationseinheit 30 der Flugdrohne 12 mit den Kommunikationseinheiten 60 und 74 der mobilen Vorrichtung 14 auf der einen Seite und einer zentralen Recheneinheit auf der anderen Seite ermöglicht. Wie oben ausgeführt, kann die zentrale Recheneinheit, welche vom Trägersystem 10 unabhängig ist, auch ein Smartphone sein.

In einem nächsten Schritt 90 werden die ermittelten Maßnahmen mit dem Trägersystem 10 auf dem landwirtschaftlichen Feld durchgeführt. Beispielsweise fliegt die Flugdrohne 12 zu dem zu bearbeitenden Bereich des landwirtschaftlichen Feldes. Der Arm 48 mit der Werkzeugeinheit 52 fährt zu dem zu entfernenden Beikraut. Die Vorschubeinheit 54 verfährt die Fräse 58 so zu dem Beikraut, dass dieses mit Aktivieren der Rotationseinheit 56 weggefräst wird.

In einem fünften Schritt 92 fliegt dann die Flugdrohne 12 zurück, und tauscht die mobile Vorrichtung 14 gegen eine andere mobile Vorrichtung 14 aus, welche für eine andere Maßnahme optimiert ist, beispielsweise mit einer Ausbringvorrichtung für Schädlingsbekämpfungsmittel oder Dünger.

Alternativ können die Schritte 86 und 88 auch entfallen, wenn die Flugdrohne 12 bereits fertig für die durchzuführende Maßnahme gerüstet ist.

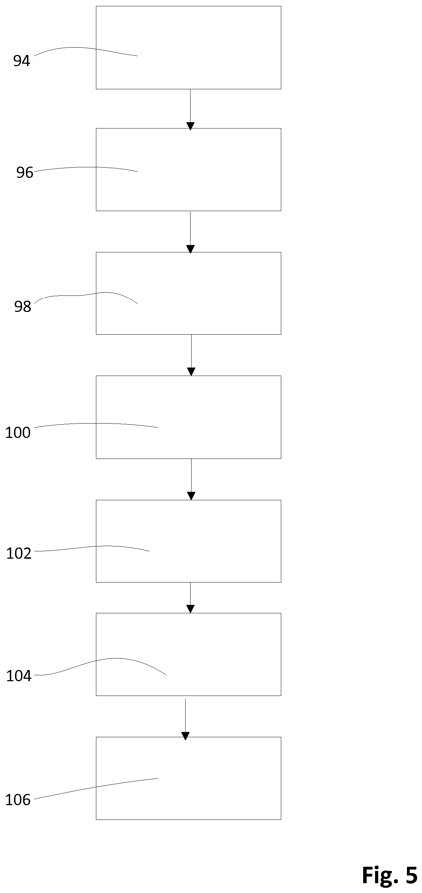

Anhand der Figur 5 wird nunmehr das Ermitteln der notwendigen Maßnahmen durch das Trägersystem 10, insbesondere durch die mobile Vorrichtung 14 im Einzelnen dargelegt.

In einem ersten Schritt 94 erfolgt die kontinuierliche Aufnahme von Daten technisch definierter Voxel und/oder Pixel und/oder Bilder durch die visuelle Detektionseinheit 62 der mobilen Vorrichtung 14. Die Voxel, Pixel und Bilder bilden Aufnahmedaten, welche fortlaufend an die Datenbank 78 übermittelt werden - zweiter Schritt 96.

In einem dritten Schritt 98 erfolgt die erfolgt die Speicherung der Aufnahmedaten.

In einem vierten Schritt 100 erfolgt ein qualitativer Datenabgleich der Aufnahmedaten mit den in der Datenbank 78 hinterlegten Daten. Hierbei erfolgt die Durchführung einer Segmentierung und Datenreduktion der Aufnahmedaten durch die Segmentierung- und Datenreduktioneinrichtung 66. Insbesondere kann auch eine Verifikation der Aufnahmedaten durch den zweiten Rechner 76 erfolgen.

In einem fünften Schritt 102 erfolgt die Bewertung durch den Klassifikator 68 in Verbindung mit dem zweiten Rechner 76 durch Unterstützung von Künstlicher Intelligenz, wie weiter unten noch ausführlich dargelegt wird.

In einem sechsten Schritt 104 erfolgt schließlich die Verarbeitung und Umsetzung der Bewertung durch den ersten Rechner 46 in regelungs- und steuerungstechnische Daten für den Motor 50, den Arm 48, die Werkzeugeinheit 52 und die Flugdrohne 12.

In einem siebten Schritt 106 erfolgt schließlich das Anfahren des Motors 50, des Arms 48 und der Werkzeugeinheit 52 zur Bearbeitung des Bodens oder zur Manipulation von Flora und Fauna.

Sofern in dieser Anmeldung von Künstlicher Intelligenz gesprochen wird, handelt es sich unter anderem um die Verwendung eines klassischen Convolutional Neural Networks - CNN - aus einem oder mehreren Convolutional Layer, gefolgt von einem Pooling Layer. Diese Folge aus Convolutional Layer und Pooling Layer kann sich prinzipiell beliebig oft wiederholen. In der Regel liegt die Eingabe als zwei- oder dreidimensionale Matrix, z. B. die Pixel eines Graustufen- oder Farbbildes, vor. Dementsprechend sind die Neuronen im Convolutional Layer angeordnet.

Die Aktivität jedes Neurons wird über eine diskrete Faltung (convolutional) berechnet. Intuitiv wird dabei schrittweise eine vergleichsweise kleine Faltungsmatrix (Filterkernel) über die Eingabe bewegt. Die Eingabe eines Neurons im Convolutional Layer berechnet sich als inneres Produkt des Filterkernels mit dem aktuell unterliegenden Bildausschnitt. Dementsprechend reagieren benachbarte Neuronen im Convolutional Layer auf sich überlappende Bereiche.

Ein Neuron in diesem Layer reagiert nur auf Reize in einer lokalen Umgebung des vorherigen Layers. Dies folgt dem biologischen Vorbild des rezeptiven Feldes. Zudem sind die Gewichte für alle Neuronen eines Convolutional Layers identisch (geteilte Gewichte, englisch: shared weights). Dies führt dazu, dass beispielsweise jedes Neuron im ersten Convolutional Layer codiert, zu welcher Intensität eine Kante in einem bestimmten lokalen Bereich der Eingabe vorliegt. Die Kantenerkennung als erster Schritt der Bilderkennung besitzt hohe biologische Plausibilität. Aus den shared weights folgt unmittelbar, dass Translationsinvarianz eine inhärente Eigenschaft von CNNs ist.

Der mittels diskreter Faltung ermittelte Input eines jeden Neurons wird nun von einer Aktivierungsfunktion, bei CNNs üblicherweise Rectified Linear Unit, kurz ReLu (f(x) = max(0, x), in den Output verwandelt, der die relative Feuerfrequenz eines echten Neurons modellieren soll. Da Backpropagation die Berechnung der Gradienten verlangt, wird in der Praxis eine differenzierbare Approximation von ReLu benutzt: $f(x) = \ln(1 + e^x)$. Analog zum visuellen Cortex steigt in tiefer gelegenen Convolutional Layers sowohl die Größe der rezeptiven Felder als auch die Komplexität der erkannten Features.

Im folgenden Schritt, dem Pooling, werden überflüssige Informationen verworfen. Zur Objekterkennung in Bildern etwa, ist die exakte Position einer Kante im Bild von vernachlässigbarem Interesse - die ungefähre Lokalisierung eines Features ist hinreichend. Es gibt verschiedene Arten des Poolings. Mit Abstand am stärksten verbreitet ist das Max-Pooling, wobei aus jedem $2 \times 2$ Quadrat aus Neuronen des Convolutional Layers nur die Aktivität des aktivsten (daher "Max") Neurons für die weiteren Berechnungsschritte beibehalten wird; die Aktivität der übrigen Neuronen wird verworfen. Trotz der Datenreduktion (im Beispiel 75 %) verringert sich in der Regel die Performance des Netzwerks nicht durch das Pooling.

Der Einsatz des Convolutional Neural Networks und der Segmentierung- und Datenreduzierungseinrichtung 66 wird im Folgenden anhand der Bilder 6 bis 14 näher erläutert.

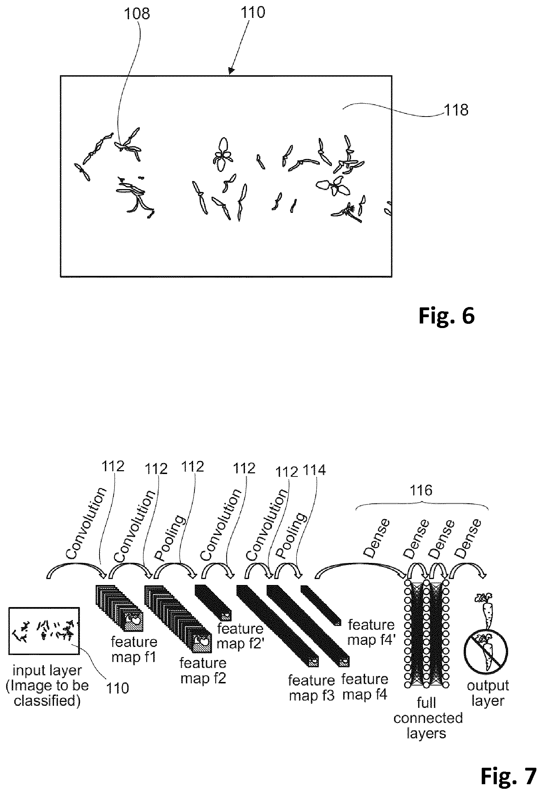

Für die Klassifikation durch den Klassifikator 68 aller Objekte in einem Bild existieren verschiedene Ansätze. Viele Ansätze beginnen damit die einzelnen Objekte erst im Bild zu finden und anschließend zu klassifizieren. Dies ist jedoch nicht immer möglich. Als Beispiel soll hier die Klassifikation von Pflanzen 108 eines Feldes herangezogen werden. Ein Beispielbild 108 zeigt Fig. 6.

In Fig. 6 sind verschiedene Pflanzen 108 abgebildet und sollen durch den Klassifikator 68 alle klassifiziert werden und dies in Echtzeit. Die Echtzeit soll in diesem Fall hier der Kameratakt von 10 Bilder pro Sekunde sein. Da wie hier im Beispiel nicht einfach unterschieden werden kann, wo genau eine Pflanze 110 endet, muss eine andere Herangehensweise verwendet werden, da die Rechenzeit nicht ausreicht, erst die Pflanzen 110 an sich zu unterscheiden und anschließend noch zu klassifizieren.

Das Bild 108 von Fig. 6 besteht aus Pixeln und jeder Pixel kann logischerweise nur genau eine Klasse beinhalten. Daher wäre ein trivialer Ansatz das gesamte Bild 108 pixelweise zu klassifizieren. Das soll heißen jeder Pixel wird nacheinander einer Klasse zugeordnet.

Da jedoch ein einzelner Pixel nicht die nötige Information enthält, um eine Aussage über die Klassenzugehörigkeit zu treffen, muss eine umliegende Fläche zur Klassifikation herangezogen werden. Diese Fläche kann dann mit einen Convolution Neuronalen Netzwerk (CNN), wie es oben beschrieben wurde, klassifiziert werden. Das Netzwerk kann dabei eine Folge wie Fig. 7 aufweisen.

Das Eingangsbild 110 ist hier das Bild von Fig. 6. Auf dieses Eingangsbild 110 werden nun die Elemente des CNN angewendet. In diesem Beispiel wären das die Convolution 112 mit den Featuren, ein anschließendes Pooling 114, eine weitere Convolution mit weiteren Featuren, ein erneutes Pooling und eine Zusammenfassung in der Dense Schicht 116. Der Ausgang des Netzwerkes gibt dann die Klassenzugehörigkeit des mittleren Pixels des Eingangsbildes 110 aus, beziehungsweise eines Pixels des Bildes 110 von Fig. 6.

Anschließend wird ein neuer Bildausschnitt, in der Regel ein Bildausschnitt das um einen Pixel verschoben ist, gewählt und wieder mittels CNN klassifiziert. Dieses Vorgehen hat zur Folge, dass die Berechnungen, die das Convolution Neuronale Netzwerk benötigt, für die Anzahl der zu klassifizierenden Pixeln wiederholt werden muss. Dies ist zeitaufwändig. Das Bild 110 von Fig. 6 hat eine Auflösung von 2000 x 1000 Pixeln. Das CNN müsste also zwei Millionen Mal berechnet werden. Das Ausgangsproblem ist jedoch nur die Klassifikation der Pflanzen 108 an sich. Im Durchschnitt enthält ein solches Bild etwa 5% Pflanzenpixel, das etwa nur 100.000 Pixel entspricht.

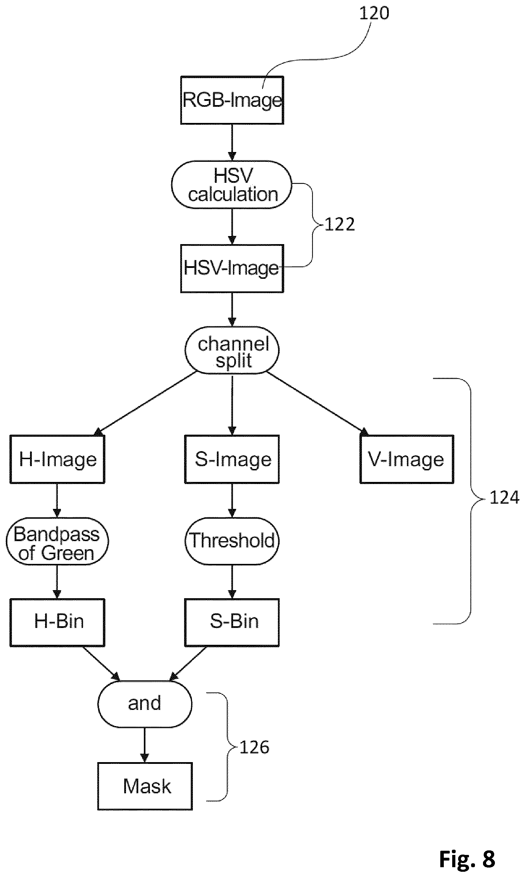

Mittels einfacher Segmentierung und Datenreduktion durch die Segmentierungs- und Datenreduktionseinheit 66 kann herausgefunden werden, ob es sich bei einem Pixel um die Darstellung eines Teils einer Pflanze 108 oder um Hintergrund 118 handelt. Diese Segmentierung ist von der Berechnung nicht so komplex wie ein CNN und daher schneller. Die Segmentierung und Datenreduktion durch die Segmentierung- und Datenreduktioneinheit 66 erfolgt dabei analog der Fig. 8. In Fig. 8 sind die einzelnen Schritte dargestellt.

In einem ersten Schritt 120 wird jedes an die Datenbank 78 übermittelte Bild aus mehreren Pixeln in das RGB-(Red, Green, Blue)-Farbmodell überführt.

In einem nächsten Schritt 122 wird jedes Pixel des übermittelten Bildes basierend auf dem RGB-Farbmodell in ein HSV (hue, saturation, value)-Farbmodell transferiert.

In einem nächsten Schritt 124 wird dieses HSV-Farbmodell bewertet.

Jeder Pixel basierend auf dem HSV-Farbmodell wird im Hinblick auf die Farbsättigung (saturation) anhand eines Schwellenwertes bewertet, wobei wenn der Wert der Farbsättigung einen Schwellenwert übersteigt, dass Pixel dem binären Wert 1 zugeordnet wird, und wenn der Wert der Farbsättigung einen Schwellenwert unterschreitet, das Pixel dem binären Wert 0 zugeordnet wird.

Parallel hierzu wird jeder Pixel basierend auf dem HSV-Farbmodell im Hinblick auf den Farbwinkel (hue) anhand eines vorbestimmten Bereiches bewertet, wobei wenn der Farbwinkel in dem vorbestimmten Bereich liegt, das Pixel dem binären Wert 1 zugeordnet wird, und wenn der Farbwinkel außerhalb des Bereichs liegt, das Pixel dem binären Wert 0 zugeordnet wird.

In einem nächsten Schritt 126 wird aus den binären Informationen des Farbwinkels und der Farbsättigung ein Zwischenbild erzeugt, welches erheblich weniger Daten als das von der Kamera erzeugte Bild 108 enthält.

Aus der Segmentierung aus Fig. 8 ergibt sich die im Folgenden angegebene Formel, die auf jeden Pixel angewendet werden muss. Das segmentierte Bild S(x,y) wird über die Aufteilung des RGB Bildes $\psi(x,y)$ in seine drei Bestandteile Rot, Grün und Blau aufgeteilt. Ein Pixel des segmentierten Bildes wird dann auf 1 gesetzt, wenn der minimale Wert von Rot, Grün oder Blau eines Pixels durch den Grünen Pixel geteilt kleiner oder gleich ist wie ein Schwellenwert (*THs*). Wobei der Schwellenwert in den 8 Bit Raum des Bildes über die Skalierung mittels 255 erfolgt. Sollte der Schwellenwert nicht erreicht werden, wird wie in Gleichung 1 der Pixel des segmentierten Bildes auf 0 gesetzt.

$$S(x,y) = \begin{cases} 1 & \text{if } \frac{MIN(\psi_{Rot}(x,y), \psi_{Grün}(x,y), \psi_{Blau}(x,y))}{\psi_{Grün}(x,y)} \leq \frac{255-THs}{255} \\ 0 & \text{otherwise} \end{cases} \quad (1)$$

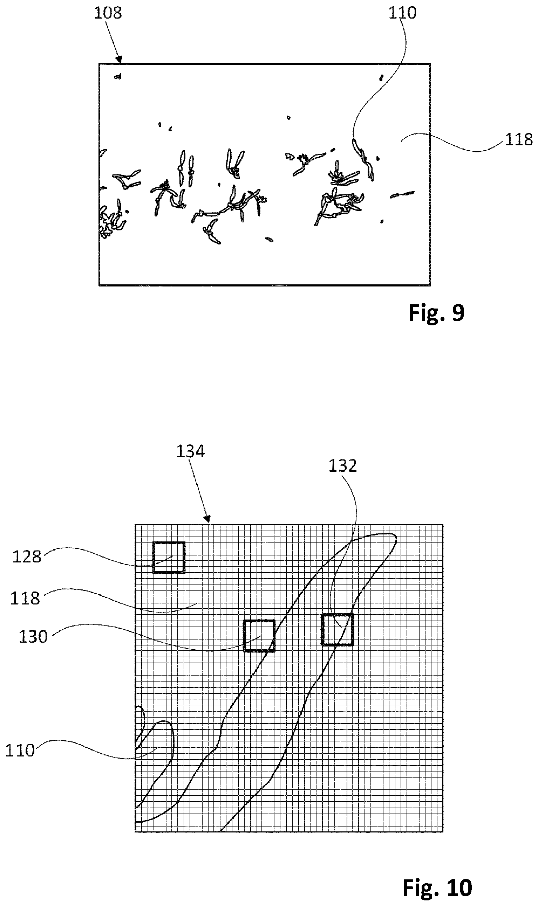

Damit ergibt sich die erste Optimierung: Bevor das gesamte Bild 108 in zwei Millionen Bilder zerlegt wird, wird die Segmentierung, gemäß Fig. 8, angewendet. Das heißt das gesamte Bild 108 wird durchlaufen und mittels der oben angegebenen Formel entschieden, ob es sich um ein Pflanzenpixel handelt oder nicht. Zum einen wird das Bild 108 segmentiert, das heißt der Hintergrund 118 wird auf Schwarz (0) gesetzt, wie dies in Fig. 9 dargestellt ist. Zum anderen wird, sofern es sich um ein Pflanzenpixel handelt, dessen Koordinaten in eine Liste geschrieben. Anschließend werden nur noch die Koordinaten in das CNN gegeben, die auch in dieser Liste stehen. Die unnötigen Pixel der Erde, also des Hintergrundes 118, entfallen. Damit wird das CNN in etwa 20-mal weniger aufgerufen.

Durch die Segmentierung wird der Hintergrund 118 auf den Wert 0 gesetzt. Auch die Bildelemente, die das CNN betrachtet, besitzen nun segmentierte Bilder. Normalerweise würde auf eine Convolution-Schicht die Feature-Berechnung auf jeden Pixel des Bildelementes angewendet werden. Damit ergeben sich jedoch drei Fälle 128, 130, 132 für die Berechnung, die in Fig. 10 dargestellt sind, jeweils für einen Feature 134 der Größe 5x5.

Der Rote Fall 128 zeigt eine Feature-Berechnung, in dem das Feature komplett auf dem Hintergrund 118 liegt. Hier wird jedes Element mit 0 multipliziert, das hat zur Folge, dass die gesamte Berechnung 0 ergibt, beziehungsweise den Biaswert. Das Ergebnis dieser Berechnung ist daher schon vor der Rechnung bekannt. Selbst wenn der Hintergrund 118 nicht null wäre, also Erde aufweisen würde, würde diese Berechnung keine Information über die Pflanze 110 beinhalten, daher kann das Ergebnis einfach eine konstanter fiktiver Wert sein.

Im Gelben Fall 130 liegt der mittlere Feature-Wert nicht auf einer Pflanze 110. Das heißt, dass ein Teil ebenfalls eine Multiplikation mit Null ist. Dieser Fall verzehrt die Pflanze 110 im Randbereich und macht diese Größe in der Feature-Map.

Im Blauen Fall 132 liegt mindestens der mittlere Pixel des Features auf einer Pflanze.

Nach Betrachtung dieser drei Fälle 128, 130, 132 müssen nur der Gelbe und Blaue Fall 130 und 132 berechnet werden. Also die Fälle 130, 132 in denen das Feature mindestens einen Eingangswert ungleich Null hat. Von allen anderen Feature-Berechnungen sind Ergebnisse vor der Berechnung bekannt, sie sind null beziehungsweise weisen lediglich den Bias Wert auf. Die Koordinaten, in denen der Blaue Fall 132 auftritt, sind bekannt. Das sind die Koordinaten, die bei der Segmentierung gespeichert werden. Der Gelbe Fall 130 benötigt wiederum eine Berechnung, ob diese eingetreten ist. Dies verlangt eine Überprüfung jedes in der Segmentierung gefundenen Pflanzenpixels. Da diese Kontrolle ein zu großer Aufwand ist und der Gelbe Fall 130 nur im Randbereich einer Pflanze 110 auftritt, soll dieser Fall ignoriert werden.

Daher kann die Berechnung dahingehend optimiert werden, dass die Feature-Berechnung und alle anderen Elemente des CNNs nur auf die gefundenen Pflanzenpixel angewendet werden sollen.

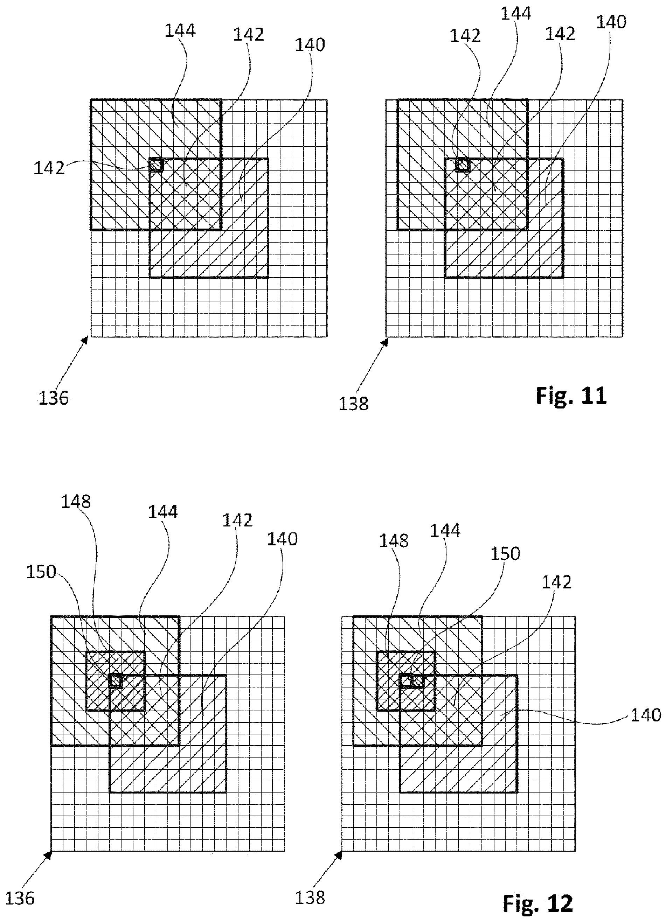

In Fig. 11 ist schematisch dargestellt, wie sich zwei benachbarte Pflanzenpixel 136, 138 unterscheiden. Links ein Pflanzenpixel 136 und rechts der Nachbar-Pflanzenpixel 138. Der Blaue/Purpur Bereich 140, 142 könnten verschiedene Pflanzen sein, die klassifiziert werden müssen. Der Rote/Purpur Bereich 144, 142 stellt das Bildelement da, das das CNN betrachtet, um den orangenen Pixel 146 zu klassifizieren.

Bei genauer Betrachtung kann festgestellt werden, dass der betrachtete Bereich (Rot/Purpur) 144, 142 sich stark überlappt. Das bedeutet wiederum, dass in beiden Bildelementen 136, 138 größtenteils dieselben Werte stehen. Wenn nun das CNN das Feature in der Convolution-Schicht berechnet, würde auch aus der Feature-Berechnung dieselben Werte errechnet werden.

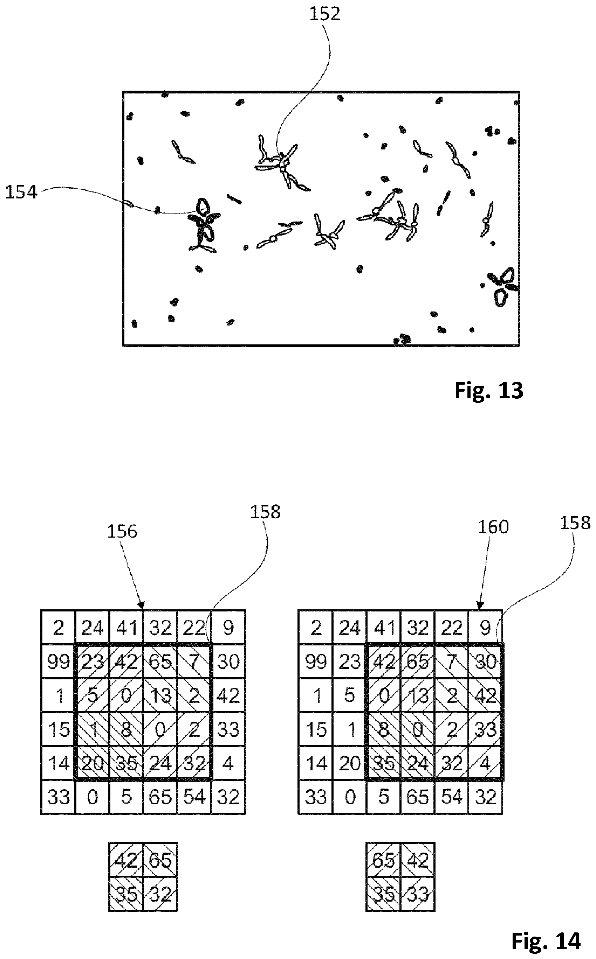

In Fig. 12 ist schematisch ein Feature 148 mit der Größe von 5 x 5 Pixel in Grün skizziert. Dieses Feature 148 steht an denselben Koordinaten innerhalb des gesamten Bildes, jedoch ist es verschoben innerhalb des vom CNN zu betrachtenden Bildelementes (Rot/Purpur) 144, 142. Da die Örtlichkeit jedoch im gesamten Bild dieselbe ist würde die Berechnung für den mittleren schwarzen Kasten 150 denselben Wert sowohl im linken Bild 136 als auch im rechten Bild 138 ergeben. Diese Erkenntnis lässt sich auf alle Elemente eines CNN anwenden. Dadurch kann, sofern der Randbereich ignoriert wird, die einzelne Feature-Berechnung zuerst auf das gesamte Bild angewendet werden. Theoretisch spielt die Zerlegung des Eingangsbildes 108 erst mit dem Dense-Layer 116 eine entscheidende Rolle. Das Dense-Layer 116 kann jedoch genauso wie eine Convolution 112 berechnet werden. Die Featuregröße ergibt sich dabei aus dem Zusammenspiel von Eingangsbildgröße und den vorhandenen Pooling Layern im Netzwerk. Damit lässt sich die Klassifikation weiter optimieren, es werden nun die CNN Elemente lediglich auf die gefundenen Pflanzenpixel angewendet. Die Feature-Map, die aus der letzten Convolution errechnet wird, stellt das Klassifikationsergebnis dar, wie dies in Fig. 13 dargestellt ist. Hier sind in Grün alle Karottenpflanzen 152 und in Rot das gesamte Unkraut 154 Pixelweise klassifiziert.

Durch diese Optimierungen erfolgen jedoch auch Veränderungen am Ergebnis der Klassifikation. Den größten Einfluss haben hierbei die Pooling Schichten. Bei jedem Pooling wird Information aus dem Netzwerk entfernt. Durch das nicht mehr vorhandene einzelne Betrachten der Bildelemente verliert das Pooling jedoch einen örtlichen Bezug. Die Fig. 14 veranschaulicht das Problem.

In der Fig. 14 ist jeweils ein Bildelement 156 als roter Rahmen 158 dargestellt. Vor der Optimierung würde jedes Bildelement einzeln durch das CNN laufen um seinen mittleren Pixel zu klassifizieren. Das rechte Bildelement 160 ist um einen Pixel weiter nach rechts verschoben. Die vier Farben: Purpur, Blau, Gelb und Grün zeigen die einzelnen Anwendungen des Poolings an. Wie zu sehen ist, können sie verschiedene Ergebnisse ergeben, da das Pooling immer am Rand beginnt und um ein Pooling Element (hier zwei Felder) weiterwandert. Dadurch ergeben sich aus zwei benachbarten Bildelementen 156, 160 zwei verschiedene Pooling Elemente. Das hat zur Folge, wenn dies in der Optimierung berücksichtigt. werden soll, würden sich mit jedem Pooling zwei neue Zweige für die weitere Berechnung ergeben. Da das Pooling einmal auf das gesamte Bild angewendet werden müsste mit Startpunkt oben links und ein weiteres Pooling mit dem Startpunkt oben links plus ein Pixel. In der weiteren Berechnung müssten dann beide Pooling Ergebnisse separat weiterverarbeitet werden. Bei einem weiteren zweiten Pooling würden sich wieder zwei neue Pfade ergeben, so dass vier separate Ergebnisse berechnet werden müssten. Das Ergebnis setzt sich anschließend aus den vier Ergebnissen Pixelweise rotierend durch die Ergebnisse zusammen. Wird nur ein Pfad nach dem Pooling betrachtet, wäre das Ausgangsbild nach zweimaligem Pooling kleiner. Die Länge und Breite des Ausgangsbildes wäre dann jeweils nur ¼ so groß wie das Eingangsbild. Bei der Betrachtung aller Pfade würde etwa die Eingangsbildgröße herauskommen.

Ein weiterer Unterschied stellen die fehlenden Randbereiche der Pflanzen dar. Da die Features nicht auf alle Elemente angewendet werden, indem sie irgendeine Überlappung mit der Pflanze besitzen, existieren hier Berechnungsunterschiede. Auch dies kann das Klassifikationsergebnis verändern zu der herkömmlichen Berechnung.

Die fehlende Berechnung der Feature-Werte außerhalb der Pflanze können dahingehend andere Werte hervorrufen, da das Ergebnis mit Null ausgewiesen wird, was allerdings in Wirklichkeit der Biaswert ist.

Zwar beeinflussen diese drei Faktoren die Ergebnisse, jedoch zeigt sich, dass das CNN sehr robust ist und damit die Ergebnisse immer noch einen sehr hohen Genauigkeitswert erfüllen.

Der nächste Schritt wäre, das Netzwerk direkt mit diesen Modifikationen zu trainieren, damit das Netzwerk sich noch besser auf seine neue Berechnung einstellen kann und somit etwaige Fehler direkt in der Berechnung kompensiert.

Die Segmentierung- und Datenreduktionseinrichtung versieht die Pixel betreffend das Unkraut 154 mit Lagekoordinaten.

**Bezugszeichenliste**

10    Trägersystem

| 12 | Flugdrohne |
| 12a | Aufnahme, Aufnahmeraum der Flugdrohne 12 |
| 12b | Steuereinrichtung der Flugdrohne |
| 14 | mobile Vorrichtung |
| 14a | erste Einheit |
| 14b | zweite Einheit |
| 14c | Aufnahme für Greifarm an der mobilen Vorrichtung 14 |
| 16 | Antrieb |
| 18 | Elektromotor |
| 20 | Propeller |
| 22 | Füße |
| 24 | Batterie |
| 26a | Spannungsschnittstelle an der Flugdrohne 12 |
| 26b | Spannungsschnittstelle an der mobilen Vorrichtung 14 |
| 28 | Steckverbindung |
| 30 | Kommunikationseinheit |
| 32 | Antenne |
| 34 | GPS-Einheit |
| 36a | Schnittstelle an der Flugdrohne 12 |
| 36b | Schnittstelle an der mobilen Vorrichtung 14 |
| 38 | Steckverbindung |
| 40 | erstes Gehäuse der ersten Einheit 14a |
| 42 | zweites Gehäuse der zweiten Einheit 14b |
| 44 | Steckverbindung |
| 46 | erster Rechner |
| 48 | Arm als Aktor |
| 50 | Motor |
| 52 | Werkzeugeinheit |
| 54 | Vorschubeinheit |
| 56 | Rotationseinheit |
| 58 | Fräse |
| 60 | erste Kommunikationseinheit der ersten Einheit 14a |
| 62 | visuelle Detektionseinheit |
| 64 | Kamera |
| 66 | Segmentierung- und Datenreduktioneinrichtung |
| 68 | Klassifikator |
| 70a | Schnittstelle der ersten Einheit 14a |
| 70b | Schnittstelle der zweiten Einheit 14b |
| 72 | Kommunikationsverbindung |
| 74 | zweite Kommunikationseinheit der zweiten Einheit 14b |
| 76 | zweiter Rechner |
| 78 | Datenbank |
| 80 | Steckverbindung |
| 82a | Greifarm, links |
| 82b | Greifarm, rechts |
| 84 | erster Schritt: Ermitteln der notwendigen Maßnahmen |
| 86 | zweiter Schritt: Aussuchen der mobilen Vorrichtung 14 aus der zur Verfügung stehenden mobilen Vorrichtungen 14 |
| 88 | dritter Schritt: Verbinden der Vorrichtung mit der Flugdrohne 12 |
| 90 | vierter Schritt: Durchführen der ermittelten Maßnahmen |
| 92 | fünfter Schritt: austauschen der mobilen Vorrichtung 14 gegen eine andere mobile Vorrichtung 14 und Durchführung einer weiteren Maßnahme |
| 94 | erster Schritt: kontinuierliche Aufnahme |
| 96 | zweiter Schritt: Übermittlung der Daten |
| 98 | dritter Schritt: Speicherung der Daten |
| 100 | vierter Schritt: Datenabgleich |
| 102 | fünfter Schritt: Bewertung durch den Klassifikator 68 |
| 104 | sechster Schritt: Umsetzung in Regelung-und steuerungstechnische Daten |

| 106 | siebter Schritt: Anfahren der Aggregate |
| 108 | Beispielsbild, Eingangsbild |
| 110 | Pflanze |
| 112 | Convolution |
| 114 | Pooling |
| 116 | Zusammenfassung in einer Dense-Schicht |
| 118 | Hintergrund |
| 120 | erster Schritt: Überführen in ein RGB-Farbmodell |
| 122 | zweiter Schritt: Transferieren in ein HSV-Farbmodell |
| 124 | dritter Schritt: Bewertung des HSV-Bildes |
| 126 | vierter Schritt: Erzeugen eines Zwischenbildes |
| 128 | erster Fall, rot |
| 130 | zweiter Fall, gelb |
| 132 | dritter Fall, blau |
| 134 | Feature |
| 136 | Pflanzenpixel, links |
| 138 | Pflanzenpixel, rechts |
| 140 | blauer Bereich |
| 142 | purpurner Bereich |
| 144 | roter Bereich |
| 146 | oranger Bereich |
| 148 | Feature, grün |
| 150 | mittlerer schwarzer Kasten |
| 152 | Karottenpflanze |
| 154 | Unkraut, Beikraut |
| 156 | Bildelement, links |
| 158 | roter Rahmen |
| 160 | Bildelement, rechts |

**Patentansprüche**

1. Mobile Analyse- und Bearbeitungsvorrichtung (14) für die Landwirtschaft zur Bearbeitung des Bodens und/oder zur Manipulation von Flora und Fauna, umfassend zumindest einen Sensor (62), eine Werkzeugeinheit (52) mit zumindest einem motorisch angetriebenen Werkzeug (58), einen Aktor (48) zum Verfahren zumindest des Werkzeugs (58) der Werkzeugeinheit (52), einen Motor (50) zum Antreiben der Werkezugeinheit (52) und/oder des Aktors (48), eine Datenbank (78), eine erste Kommunikationseinheit (60) mit Schnittstelle (70a) und einen ersten Rechner (46) zum Steuern des Sensors (62), der Werkzeugeinheit (52) und des Aktors (48) aufgrund generierter Steuerbefehle, wobei die über den Sensor (62) erfassten Daten mit den in der Datenbank (78) hinterlegten Daten fortlaufend abgeglichen werden, um entsprechende Steuersignale für den Aktor (48), die Werkzeugeinheit (52) und/oder den Motor (50) zu generieren, **gekennzeichnet durch** eine in eine erste Einheit (14a) und eine zweite Einheit (14b) zweigeteilte Ausbildung, wobei in der ersten Einheit (14a) der Sensor (62), die Werkzeugeinheit (52), der Motor (50) zum Antreiben des Werkzeugs (58), der Werkzeugeinheit (52) und/oder des Aktors (48), der Aktor (48), ein erster Rechner (46) und eine erste Kommunikationseinheit (60) mit Schnittstelle (70a) vorgesehen sind und in der zweiten Einheit (14b) die Datenbank (78), ein zweiter Rechner (76) und eine zweite Kommunikationseinheit (74) mit Schnittstelle (36b, 70b), vorgesehen sind, wobei die erste Einheit (14a) und die zweite Einheit (14b) über die Schnittstellen (70a, 70b) zum Datenaustausch miteinander verbindbar sind, die erste Einheit (14a) ein erstes Gehäuse (40) und die zweite Einheit (14b) ein zweites Gehäuse (42) umfasst, das erste und das zweite Gehäuse (40, 42) über eine Steckverbindung (44, 80) lösbar miteinander verbunden sind, und der Datenabgleich der durch den Sensor (62) ermittelten Daten mit der Datenbank (78) in Echtzeit mit einer Verifikation und Klassifikation der durch den Sensor (62) ermittelten Daten durch den zweiten Rechner (76) erfolgt.

2. Analyse- und Bearbeitungsvorrichtung nach Anspruch 1, **dadurch gekennzeichnet, dass** der Sensor eine visuelle Detektionseinheit (62) mit einer Kamera (64) ist.

3. Analyse- und Bearbeitungsvorrichtung nach Anspruch 2, **dadurch gekennzeichnet, dass** die visuelle Detektionseinheit (62) eine Segmentierungs- und Datenreduzierungseinrichtung (66) umfasst.

4. Analyse- und Bearbeitungsvorrichtung nach Anspruch 2 oder 3, **dadurch gekennzeichnet, dass** die visuelle Detektionseinheit (62) einen Klassifikator (68) umfasst, der eine Bewertung in Verbindung mit dem zweiten Rechner (76) der abgeglichenen Aufnahmedaten mit bestehenden definierten Datensätzen in der Datenbank (78), insbesondere unterstützt durch Künstliche Intelligenz, durchführt.

5. Analyse- und Bearbeitungsvorrichtung nach einem der vorangehenden Ansprüche, **dadurch gekennzeichnet, dass** Mittel (82a, 82b) zum bedarfsweisen Verbinden mit einem, insbesondere als Flugdrohne ausgebildeten, Träger (12) vorgesehen sind, welcher die Vorrichtung (14) bewegt.

6. Analyse- und Bearbeitungsvorrichtung nach einem der vorangehenden Ansprüche, **dadurch gekennzeichnet, dass** das erste und das zweite Gehäuse (40, 42) als Mittel für das bedarfsweise Verbinden mit dem Träger (12) Aufnahmen (14c) aufweist, welche entsprechenden Haltemitteln (82a, 82b) des Trägers (12) zugeordnet sind, über welche die Vorrichtung (14) durch den Träger (12) ergriffen und bewegt werden kann.

7. Analyse- und Bearbeitungsvorrichtung nach einem der vorangehenden Ansprüche, **dadurch gekennzeichnet, dass** das erste und das zweite Gehäuse (40, 42) als Mittel für das bedarfsweise Verbinden mit dem Träger (12) Kupplungsmittel (26b, 28, 36b, 38) aufweist, welche entsprechenden Kupplungsmitteln (26a, 28, 36a, 38) des Trägers (12) zugeordnet sind, über welche die Vorrichtung (14) mit dem Träger (12) verbunden und bewegt werden kann.

8. Analyse- und Bearbeitungsvorrichtung nach einem der vorangehenden Ansprüche, **dadurch gekennzeichnet, dass** die Werkzeugeinheit (52) mindestens eine Vorschubeinheit (54) und eine Rotationseinheit (56) aufweist, welche mit dem Motor (50) zusammenwirkt.

9. Analyse- und Bearbeitungsvorrichtung nach Anspruch 8, **dadurch gekennzeichnet, dass** die Rotationseinheit (56) an einem distalen Ende zumindest das Werkzeug (58) aufweist, insbesondere eine Fräse (58) oder eine Messereinheit.

10. Analyse- und Bearbeitungsvorrichtung nach einem der vorangehenden Ansprüche, **gekennzeichnet durch** einen Spannungsanschluss (26b) für eine externe Spannungsversorgung.

11. Analyse- und Bearbeitungsvorrichtung nach Anspruch 10, **dadurch gekennzeichnet, dass** der Spannungsanschluss (26b) an der ersten Einheit (14a) vorgesehen ist und über diesen die erste Einheit (14a) als auch die zweite Einheit (14b) mit Spannung versorgt ist.

12. Analyse- und Bearbeitungsvorrichtung nach einem der vorangehenden Ansprüche, **gekennzeichnet durch** eine weitere Kommunikationsschnittstelle (36b) für einen Träger (12).

13. Analyse- und Bearbeitungsvorrichtung nach Anspruch 12, **dadurch gekennzeichnet, dass** die weitere Kommunikationsschnittstelle (36b) in der zweiten Einheit (14b) angeordnet ist.

14. Verfahren zur Echtzeitregelung der Bearbeitung des Bodens und/oder der Manipulation von Flora und Fauna durch die Vorrichtung nach einem der vorangegangenen Ansprüche mit den folgenden Schritten:

 a. zeitlich kontinuierliche Aufnahme datentechnisch definierter Voxel und/oder Pixel und/oder Bilder durch den Sensor;
 b. Übermittlung der Aufnahmedaten an die Datenbank (78);
 c. Speicherung der Aufnahmedaten in der Datenbank (78);
 d. qualitativer Datenabgleich der Aufnahmedaten mit den in der Datenbank (78) hinterlegten Daten, mit Durchführung einer Segmentierung und Datenreduktion der Aufnahmedaten mittels einer Segmentierungs- und Datenreduktionsvorrichtung (66) und/oder mit Durchführung einer Verifikation der Aufnahmedaten durch den zweiten Rechner (76);
 e. Bewertung der abgeglichenen Aufnahmedaten mit bestehenden definierten Datensätzen in der Datenbank (78) durch einen Klassifikator (68) in Verbindung mit dem zweiten Rechner (76);
 f. Verarbeitung und Umsetzung der Bewertung durch den ersten Rechner (46) in regelungs- und/oder steuerungstechnische Daten für den Motor, den Aktor, die Werkzeugeinheit und/oder dem zugeordneten Träger.

15. Verfahren nach Anspruch 14, **dadurch gekennzeichnet, dass** nach Vorliegen der regelungs- und/oder steuerungstechnischen Daten ein Anfahren des Motors (50), des Aktors (48), der Werkzeugeinheit (52) und/oder des Trägers (12) zur Bearbeitung des Bodens und/oder eines zugeordneten Trägers (12) zur Manipulation von Flora und Fauna erfolgt.

16. Verfahren nach Anspruch 14 oder 15, **dadurch gekennzeichnet, dass** die Bewertung in einem mit dem Klassifikator (68) zusammenwirkenden zweiten Rechner (76) und die Verarbeitung und Umsetzung der Bewertung in regelungs- und/oder steuerungstechnische Daten in dem ersten Rechner (46) durchgeführt wird, wofür die Bewertung von dem zweiten Rechner (46, 76) an den ersten Rechner (46) übermittelt wird.

17. Verfahren nach Anspruch 14 oder 15, **dadurch gekennzeichnet, dass** die Speicherung, der qualitative Datenabgleich der Aufnahmedaten mit in der Datenbank (78) hinterlegten Daten und/oder die Bewertung durch den Klassifikator (68) durch Künstliche Intelligenz unterstützt werden.

**Claims**

1. Mobile analysis and processing device (14) for use in agriculture for cultivating the soil and/or for manipulating flora and fauna, comprising at least one sensor (62), a tool unit (52) with at least one motor-driven tool (58), an actuator (48) for moving at least the tool (58) of the tool unit (52), a motor (50) for driving the tool unit (52) and/or the actuator (48), a database (78), a first communication unit (60) with an interface (70a) and a first computer (46) for controlling the sensor (62), the tool unit (52) and the actuator (48) on the basis of generated control commands, with the data collected by the sensor (62) being continuously compared with the data stored in the database (78) in order to generate appropriate control signals for the actuator (48), the tool unit (52) and/or the motor (50), **characterized by** a two-part design consisting of a first unit (14a) and a second unit (14b), with the sensor (62), the tool unit (52), the motor (50) for driving the tool (58), the tool unit (52) and/or the actuator (48), the actuator (48), a first computer (46) and a first communication unit (60) with an interface (70a) being provided in the first unit (14a), and the database (78), a second computer (76) and a second communication unit (74) with an interface (36b, 70b) being provided in the second unit (14b), wherein the first unit (14a) and the second unit (14b) can be connected to one another via the interfaces (70a, 70b) for data exchange, with the first unit (14a) comprising a first housing (40), and the second unit (14b) comprising a second housing (42), which first and second housings (40, 42) being detachably connected to one another via a plug connection (44, 80), and the data determined by the sensor (62) is compared with the data stored in the database (78) in real time with verification and classification of the data determined by the sensor (62) by the second computer (76).

2. Analysis and processing device according to claim 1, **characterized in that** the sensor is a visual detection unit (62) with a camera (64).

3. Analysis and processing device according to claim 2, **characterized in that** the visual detection unit (62) comprises a segmentation and data reduction device (66).

4. Analysis and processing device according to any one of claims 2 or 3 above, **characterized in that** the visual detection unit (62) comprises a classifier (68) which performs an evaluation in conjunction with the second computer (76) of the compared recording data with existing defined data sets in the database (78), in particular supported by artificial intelligence.

5. Analysis and processing device according to any one of the preceding claims, **characterized in that** means (82a, 82b) are provided for connecting it to a carrier (12) as required, in particular designed as an aerial drone, which moves the device (14).

6. Analysis and processing device according to any one of the preceding claims, **characterized in that** the first and second housings (40, 42) have receptacles (14c) as means for connection to the carrier (12) as required, which receptacles are assigned to corresponding holding means (82a, 82b) of the carrier (12), by means of which the device (14) can be gripped and moved by the carrier (12).

7. Analysis and processing device according to any one of the preceding claims, **characterized in that** the first and second housings (40, 42) have coupling means (26b, 28, 36b, 38) as means for connecting to the carrier (12) as required, which former coupling means are assigned to respective coupling means (26a, 28, 36a, 38) of the carrier (12), via which the device (14) can be connected to the carrier (12) and moved.

8. Analysis and processing device according to any one of the preceding claims, **characterized in that** the tool unit (52) has at least one feed unit (54) and a rotation unit (56) which interacts with the motor (50).

9. Analysis and processing device according to claim 8, **characterized in that** provided on a distal end of the rotation unit (56) there is at least the tool (58), in particular a milling cutter (58) or a blade unit.

10. Analysis and processing apparatus according to any one of the preceding claims, **characterized by** a voltage terminal (26b) for external voltage supply.

11. Analysis and processing device according to claim 10, **characterized in that** the voltage terminal (26b) is provided on the first unit (14a), and this terminal supplies voltage to the first unit (14a) and the second unit (14b).

12. Analysis and processing device according to any of the preceding claims, **characterized by** an additional communication interface (36b) for a carrier (12).

13. Analysis and processing device according to claim 12, **characterized in that** the additional communication interface (36b) is located in the second unit (14b).

14. Method for real-time control of the cultivation of the soil and/or manipulation of flora and fauna by the device according to any one of the preceding claims, comprising the following steps:

   a. continuous recording of data-defined voxels and/or pixels and/or images by the sensor;
   b. transmitting the recording data to the database (78);
   c. storing the recording data in the database (78);
   d. qualitative data comparison of the recording data with the data stored in the database (78), including implementing a segmentation and data reduction of the recording data by means of a segmentation and data reduction device (66) and/or implementing a verification of the recording data by the second computer (76);
   e. evaluating the compared recording data using existing defined data sets in the database (78) by a classifier (68) in conjunction with the second computer (76);
   f. processing and converting the evaluation by the first computer (46) into control and/or control-related data for the motor, the actuator, the tool unit and/or the associated carrier.

15. Method according to claim 14, **characterized in that** the motor (50), the actuator (48), the tool unit (52) and/or the carrier (12) for cultivating the soil and/or an associated carrier (12) for manipulating flora and fauna are started up once the regulation- and/or control-related data are available.

16. Method according to any one of claims 14 or 15 above, **characterized in that** the evaluation is carried out in a second computer (76) cooperating with the classifier (68), and the processing and conversion of the evaluation into regulation- and/or control-related data is carried out in the first computer (46), for which purpose the evaluation is transmitted from the second computer (46, 76) to the first computer (46).

17. Method according to any one of claims 14 or 15 above, **characterized in that** the storage, the qualitative data comparison of the recording data with data stored in the database (78) and/or the evaluation by the classifier (68) are all supported by artificial intelligence.

**Revendications**

1. Dispositif d'analyse et de traitement mobile (14) pour l'agriculture pour le traitement du sol et/ou pour la manipulation de la flore et de la faune, comprenant au moins un capteur (62), une unité d'outil (52) avec au moins un outil (58) entraîné par moteur, un actionneur (48) pour déplacer au moins l'outil (58) de l'unité d'outil (52), un moteur (50) pour entraîner l'unité d'outil (52) et/ou l'actionneur (48), une base de données (78), une première unité de communication (60) avec interface (70a) et un premier ordinateur (46) pour commander le capteur (62), l'unité d'outil (52) et l'actionneur (48) sur la base d'instructions de commande générées, dans lequel les données acquises par l'intermédiaire du capteur (62) sont comparées en continu avec les données enregistrées dans la base de données (78), afin de générer des signaux de commande correspondants pour l'actionneur (48), l'unité d'outil (52) et/ou le moteur (50), **caractérisé par** une réalisation en deux parties, avec une première unité (14a) et une deuxième unité (14b), dans lequel le capteur (62), l'unité d'outil (52), le moteur (50) pour entraîner l'outil (58), l'unité d'outil (52) et/ou l'actionneur (48), l'actionneur (48), un premier ordinateur (46) et une première unité de communication (60) avec interface (70a) sont prévus dans la première unité (14a) et la base de données (78), un deuxième ordinateur (76) et une deuxième unité de communication (74) avec interface (36b, 70b) sont prévus dans la deuxième unité (14b), dans lequel la première unité (14a) et la deuxième unité (14b) peuvent être reliées l'une à l'autre par l'intermédiaire des interfaces (70a, 70b) pour l'échange de données, la première unité (14a) comprend un premier boîtier (40) et la deuxième unité (14b) un deuxième boîtier (42), le premier et le deuxième boîtier (40, 42) sont reliés l'un à l'autre de manière détachable par l'intermédiaire d'une liaison enfichable (44, 80), et la comparaison de données des données déterminées par le capteur (62) avec la base de données (78) est effectuée en temps réel par le deuxième ordinateur (76) avec une vérification et classification des données déterminées par le capteur (62).

2.  Dispositif d'analyse et de traitement selon la revendication 1, **caractérisé en ce que** le capteur est une unité de détection visuelle (62) avec une caméra (64).

3.  Dispositif d'analyse et de traitement selon la revendication 2, **caractérisé en ce que** l'unité de détection visuelle (62) comprend un système de segmentation et de réduction de données (66).

4.  Dispositif d'analyse et de traitement selon la revendication 2 ou 3, **caractérisé en ce que** l'unité de détection visuelle (62) comprend un classificateur (68), qui met en œuvre une évaluation en liaison avec le deuxième ordinateur (76) des données enregistrées comparées avec des ensembles de données définis existants dans la base de données (78), en particulier de manière assistée par l'intelligence artificielle.

5.  Dispositif d'analyse et de traitement selon l'une quelconque des revendications précédentes, **caractérisé en ce que** des moyens (82a, 82b) pour la liaison, si besoin est, à un porteur (12), réalisé en particulier sous la forme d'un drone, lequel déplace le dispositif (14), sont prévus.

6.  Dispositif d'analyse et de traitement selon l'une quelconque des revendications précédentes, **caractérisé en ce que** le premier et le deuxième boîtier (40, 42) sous la forme de moyens pour la liaison, si besoin est, au porteur (12) présente des logements (14c), lesquels sont associés à des moyens de retenue (82a, 82b) correspondants du porteur (12), par l'intermédiaire desquels le dispositif (14) peut être saisi par le porteur (12) et déplacé.

7.  Dispositif d'analyse et de traitement selon l'une quelconque des revendications précédentes, **caractérisé en ce que** le premier et le deuxième boîtier (40, 42) sous la forme de moyens pour la liaison, si besoin est, au porteur (12) présente des moyens d'accouplement (26b, 28, 36b, 38), lesquels sont associés à des moyens d'accouplement (26a, 28, 36a, 38) correspondants du porteur (12), par l'intermédiaire desquels le dispositif (14) peut être relié au porteur (12) et déplacé.

8.  Dispositif d'analyse et de traitement selon l'une quelconque des revendications précédentes, **caractérisé en ce que** l'unité d'outil (52) présente au moins une unité d'avance (54) et une unité de rotation (56), laquelle coopère avec le moteur (50).

9.  Dispositif d'analyse et de traitement selon la revendication 8, **caractérisé en ce que** l'unité de rotation (56) présente à une extrémité distale au moins l'outil (58), en particulier une fraise (58) ou une unité de lame.

10. Dispositif d'analyse et de traitement selon l'une quelconque des revendications précédentes, **caractérisé par** un raccordement en tension (26b) pour une alimentation en tension externe.

11. Dispositif d'analyse et de traitement selon la revendication 10, **caractérisé en ce que** le raccordement de tension (26b) est prévu sur la première unité (14a) et la première unité (14a) ainsi que la deuxième unité (14b) est alimentée en tension par l'intermédiaire de celui-ci.

12. Dispositif d'analyse et de traitement selon l'une quelconque des revendications précédentes, **caractérisé par** une autre interface de communication (36b) pour un porteur (12).

13. Dispositif d'analyse et de traitement selon la revendication 12, **caractérisé en ce que** l'autre interface de communication (36b) est disposée dans la deuxième unité (14b).

14. Procédé pour la régulation en temps réel du traitement du sol et/ou de la manipulation de la flore et la faune par le dispositif selon l'une quelconque des revendications précédentes avec les étapes suivantes :

a. l'enregistrement continu dans le temps de voxels et/ou pixels et/ou images définis en termes de technique de données par le capteur ;

b. la transmission des données enregistrées à la base de données (78) ;

C. le stockage des données enregistrées dans la base de données (78) ;

d. la comparaison de données qualitative des données enregistrées avec les données mises en mémoire dans la base de données (78), avec la mise en œuvre d'une segmentation et réduction de données des données enregistrées au moyen d'un dispositif de segmentations et de réduction de données (66) et/ou avec mise en œuvre d'une vérification des données enregistrées par le deuxième ordinateur (76) ;

e. l'évaluation des données enregistrées comparées avec les ensembles de données définis existants dans la base de données (78) par un classifieur (68) en liaison avec le deuxième ordinateur (76) ;

f. le traitement et la conversion de l'évaluation par le premier ordinateur (46) en données de technique de régulation et/ou de commande pour le moteur, l'actionneur, l'unité d'outil et/ou le porteur associé.

15. Procédé selon la revendication 14, **caractérisé en ce qu'**une fois les données de technique de régulation et/ou de commande disponibles, une mise en marche du moteur (50), de l'actionneur (48), de l'unité d'outil (52) et/ou du porteur (12) pour le traitement du sol et/ou d'un porteur (12) associé pour la manipulation de la flore et la faune s'effectue.

16. Procédé selon la revendication 14 ou 15, **caractérisé en ce que** l'évaluation est mise en œuvre dans un deuxième ordinateur (76) coopérant avec le classifieur (68) et le traitement et la conversion de l'évaluation en données de technique de régulation et/ou de commande dans le premier ordinateur (46), l'évaluation étant transmise à cet effet à partir deuxième ordinateur (46, 76) au premier ordinateur (46).

17. Procédé selon la revendication 14 ou 15, **caractérisé en ce que** le stockage, la comparaison de données qualitative des données enregistrées avec les données mises en mémoire dans la base de données (78) et/ou l'évaluation par le classifieur (68) sont assistés par l'intelligence artificielle.

**Fig. 1**

EP 3 840 559 B1

Fig. 2

18

EP 3 840 559 B1

**Fig. 3**

84

86

88

90

92

**Fig. 4**

94

96

98

100

102

104

106

**Fig. 5**

**Fig. 6**

**Fig. 7**

120

RGB-Image

HSV
calculation

122

HSV-Image

channel
split

124

H-Image

S-Image

V-Image

Bandpass
of Green

Threshold

H-Bin

S-Bin

and

126

Mask

**Fig. 8**

**Fig. 9**

**Fig. 10**

Fig. 11

Fig. 12

**Fig. 13**

**Fig. 14**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4039797 A1
- DE 102015209879 A1
- DE 102015209891 A1
- DE 102015209888 A1
- DE 102013222776 A1
- WO 2018033925 A1
- WO 2017181127 A1